# EUROPÄISCHE PATENTANMELDUNG

(11) **EP 1 611 793 A1**
(43) Veröffentlichungstag der Anmeldung: **04.01.2006**
(21) Anmeldenummer: 05003499.0
(22) Anmeldetag: 18.02.2005
(51) Int. Cl.: A23C 19/076

(54) **In Scheiben portionierter Frischkäse und Verfahren zur Herstellung von Frischkäsescheiben**

(30) Priorität: 03.07.2004 DE 102004032303
(71) Anmelder: Huber, Wilfried Dr., 86938 Schondorf (DE)
(72) Erfinder: Natterer, Werner, 86853 Gennach (DE)
(74) Vertreter: Gehrsitz, Stefan

(57) **Zusammenfassung**

Die Erfindung betrifft Frischkäse oder Frischkäsezubereitungen, enthaltend Gelatine als Verdickungsmittel und Stabilisatoren. Um derartigen Frischkäse und Frischkäsezubereitungen in einer verbraucherfreundlicheren Portionierung anbieten zu können, sieht die Erfindung vor, dass der Frischkäse oder die Frischkäsezubereitung in Scheiben portioniert ist, wobei die dauerhafte Beibehaltung der scheibenförmigen Konsistenz durch ein Gewichtsanteilsverhältnis der Gelatine zu den Stabilisatoren von 1:1 oder höher bewirkt ist. Die Erfindung betrifft ferner ein Verfahren zur Herstellung und Portionierung von Frischkäse oder Frischkäsezubereitungen in Scheiben.

## Beschreibung

Die Erfindung betrifft Frischkäse oder Frischkäsezubereitungen nach dem Oberbegriff des Anspruchs 1 sowie ein Verfahren zur Herstellung und Portionierung von Frischkäse oder Frischkäsezubereitungen.

Frischer säuregefällter Käse, der durch Koagulation von Milch, Rahm, Quark oder Molke durch Ansäuerung oder Erwärmung hergestellt wird, ist allgemein als Frischkäse bekannt. Nach der Deutschen Käseverordnung weist Frischkäse einen Wassergehalt in der fettfreien Käsemasse von mehr als 73 % auf. Frischkäse eignet sich aufgrund seiner Zusammensetzung und Konsistenz hervorragend zur Mischung mit weiteren Zusatzstoffen und Zutaten, wie z.B. Aromen, Verdickungsmittel, Stabilisatoren oder Gewürze und Früchte und damit auch zur Herstellung von Frischkäsezubereitungen. Üblicherweise weist Frischkäse bzw. Frischkäsezubereitungen eine cremige, streichfähige Konsistenz auf und wird in der Regel in Bechern verpackt.

Aufgrund eines geänderten Verbraucherverhaltens und zur Vereinfachung der Handhabung von Frischkäse, beispielsweise beim Bestreichen von Brot oder Brötchen mit Frischkäse hat sich die Aufgabe gestellt, Frischkäse in einer verbraucherfreundlicheren Verpackung und Portionierung anzubieten.

Diese Aufgabe der Erfindung wird mit einem Frischkäse mit den Merkmalen des Anspruchs 1 sowie mit einem Verfahren zur Herstellung und Portionierung von Frischkäse oder Frischkäsezubereitungen nach Anspruch 8 gelöst.

Die Erfindung geht von dem Gedanken aus, dass ein in Scheiben portionierter Frischkäse für den Verbraucher leichter zu verarbeiten ist. Beispielsweise ist es für den Verbraucher einfacher Brot oder Brötchen mit bereits in Scheiben vorportioniertem Frischkäse zu bestreichen. Allerdings ist herkömmlicher Frischkäse aufgrund seines hohen Wassergehalts nicht ohne weiteres in Scheibenform portionierbar. Darüber hinaus ist kein Verfahren bekannt, mit dem in Scheiben portionierter Frischkäse herstellbar wäre. Hier schafft die Erfindung mit dem Frischkäse bzw. der Frischkäsezubereitung nach Anspruch 1 und dem Verfahren zur Herstellung und Portionierung von Frischkäse oder Frischkäsezubereitungen nach Anspruch 8 Abhilfe.

Der erfindungsgemäße Frischkäse bzw. die Frischkäsezubereitung nach der Erfindung enthält neben den üblichen Milchbestandteilen, welche von reinem Frischkäse, Milch, Quark, Sahne oder Molke oder einer Mischung hiervon gebildet sind, noch Gelatine als Verdickungsmittel und Stabilisatoren, wie z. B. modifizierte Stärke, Johannisbrotkernmehl, Guarkernmehl, Carrageenan und Xanthan. Um den Frischkäse bzw. die Frischkäsezubereitung in Scheiben portionierbar zu machen hat sich herausgestellt, dass ein Gewichtsverhältnis der Gelatine zu dem Gesamtgewicht der genannten Stabilisatoren von 1:1 1 oder höher eine dauerhafte Beibehaltung der scheibenförmigen Konsistenz bei üblichen Kühltemperaturen und sogar bei Zimmertemperatur ermöglicht.

In bevorzugten Ausführungsbeispielen beträgt der Gewichtsanteil der Gelatine am Gesamtgewicht des Frischkäse bzw. der Frischkäsezubereitung zwischen 1 und 3 % und der Gewichtsanteil der genannten Stabilisatoren beträgt zwischen 0,4 und 2 %. Bei einer derartigen Mischung kann der Frischkäse bzw. die Frischkäsezubereitung in Scheiben mit einer Dicke zwischen 1 und 15 mm geschnitten werden, wobei diese scheibenförmige Konsistenz selbst dann dauerhaft beibehalten wird, wenn die Scheiben ohne ein dazwischen gelegtes Papier aufeinander gestapelt werden. Die genannte Auswahl des Gewichtsverhältnisses der Gelatine zu den Stabilisatoren bewirkt nämlich einerseits, dass die Frischkäsescheiben nicht nässen und andererseits dass diese nicht aneinander kleben bleiben. Die Gelatine in dem vorgenannten Gewichtsverhältnis verleiht dem Frischkäse bzw. der Frischkäsezubereitung während und nach der Erkaltung die für die Portionierung in Scheiben erforderliche Formstabilität. Darüber hinaus wird bei der Lagerung ein Durchnässen der Frischkäsescheiben vermieden, indem das überschüssige Wasser von der Gelatine und den Stabilisatoren gebunden wird. Weiterhin wird bei der Lagerung der Frischkäsescheiben verhindert, dass diese Verkleben oder aneinander haften.

Um eine gute Verarbeitung der Frischkäsegrundmasse während des Herstellungsverfahrens zu gewährleisten, hat sich gezeigt, dass Stabilisatoren in der Frischkäsegrundmasse enthalten sein müssen, wobei deren Gewichtsanteil gleich groß oder kleiner als derjenige der Gelatine sein kann. Ein gegenüber dem Gelatineanteil höherer Gewichtsanteil der Stabilisatoren wirkt sich negativ beim Verarbeitungsprozess, insbesondere bei der mechanischen und thermischen Behandlung der Frischkäsegrundmasse, aus. Es hat sich vor allem gezeigt, dass die Frischkäsegrundmasse bei zu hohem Anteil der Stabilisatoren eine unzureichende Pumpfähigkeit bis hin zu einer nicht verarbeitbaren Konsistenz bewirkt. Andererseits ist jedoch ein bestimmter Anteil von Stabilisatoren erforderlich, um eine Syneräse im Produkt zu verhindern.

Neben den genannten Bestandteilen können weitere Zusatzstoffe, wie z. B. Aromen, Geschmacksverstärker, Gewürze, Früchte oder Fruchtzubereitungen dem Frischkäse zur Herstellung einer Frischkäsezubereitung beigefügt werden. Solange der Anteil des erfindungsgemäßen Frischkäses an einer solchen Frischkäsezubereitung mehr als 90 % beträgt, bleibt eine solche Frischkäsezubereitung streichfähig.

Zur Herstellung eines Frischkäse nach der Erfindung wird zunächst eine Frischkäsegrundmischung angemischt, welche einen Milchbestandteil sowie Gelatine als Verdickungsmittel und Stabilisatoren enthält. Bei dem Milchbestandteil kann es sich um reinen Frischkäse, Milch, Quark, Sahne oder Molke oder um eine Mischung hiervon handeln. Diese Frischkäsegrundmischung, der ggf. noch weitere Zusatzstoffe wie z.B. Gewürze, Kräuter, Aromen und Salze beigefügt werden können, wird unter mechanischer Bearbeitung auf Temperaturen von 65° C bis 95° C, insbesondere zwischen 75° C und 88° C direkt oder indirekt erhitzt und anschließend bei einem Druck zwischen 0 und 300 bar, insbesondere zwischen 50 und 150 bar homogenisiert. Eine Homogenisierung kann auch entfallen. Danach wird die noch warme Masse in eine Folienverpackung abgefüllt. Beim Abfüllen wird die erhitzte Frischkäsegrundmischung bevorzugt in eine Form gepresst. Die Folienverpackung wird verschweißt und die darin befindliche Frischkäsegrundmischung wird anschließend auf Temperaturen unterhalb von 11°C, bevorzugt auf Temperaturen zwischen 1°C und 10°C abgekühlt. Wenn die Frischkäsegrundmischung zu einem Frischkäseblock in der Folienverpackung durchgekühlt ist, wird diese aufgeschnitten und entfernt. Der formstabile Frischkäseblock wird dann in Scheiben mit einer Dicke zwischen 1 und 15 mm geschnitten. Diese Frischkäsescheiben werden anschließend entweder einzeln oder mehrere Scheiben im Stapel oder geschindelt in einer Schlauchbeutelverpackung oder einer Tiefziehverpackung verpackt. Ggf. kann zwischen den Frischkäsescheiben ein Papier oder eine Kunststofffolie gelegt werden. Die Einpackung der Scheiben in die Schlauchbeutel- bzw. Tiefziehverpackung erfolgt bevorzugt unter Vakuum und/oder unter Schutzgas. Die Frischkäsescheiben können vor dem Verpacken auch in Würfelform geschnitten und anschließend verpackt werden.

Die nachfolgenden Beispiele geben Rezepturen für Frischkäse nach der Erfindung in einer Doppelrahmstufe (Beispiele 1 und 2) und in einer fettfreien Rezeptur mit einem Fettgehalt von 0,2 % (Beispiel 3) an:

**Beispiel 1 (Rezeptur für Frischkäsescheiben Natur, Doppelrahmstufe):**

| | Zutaten | Kg | % | Pro Tonne | TM | FiTr | Kg TM | Kg Fett | | |
|---|---|---|---|---|---|---|---|---|---|---|
| | Frischkäse 46% | 300,00 | 94,51 | 945,11 | 46,00 | 75,0 0 | 434,75 | 326,0 6 | | |
| | Gelatine | 7,00 | 2,21 | 22,05 | 98,00 | | 21,61 | 0,00 | | |
| | modifizierte Stärke | 0,82 | 0,26 | 2,58 | 98,00 | | 2,53 | 0,00 | | |
| | Johannisbrotkern mehl | 0,42 | 0,13 | 1,32 | 98,00 | | 1,30 | 0,00 | | |
| | Guarkernmehl | 0,42 | 0,13 | 1,32 | 98,00 | | 1,30 | 0,00 | | |
| | Carrageenan | 0,34 | 0,11 | 1,07 | 98,00 | | 1,05 | 0,00 | | |
| | Xanthan | 0,20 | 0,06 | 0,63 | 98,00 | | 0,62 | 0,00 | | |
| | NaCl | 2,00 | 0,63 | 6,30 | 98,00 | | 6,17 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | Summe | 311,20 | 98,04 | 980,39 | | | | | | |
| | Kondensat (Wasser) | 6,22 | 1,96 | 19,61 | | | TM | Fett | | |
| | Gesamtsumme | 317,42 | 100,0 0 | 1000,00 | | | 46,93 | 32,61 | | |
| | Ausbeute | | | | | | FiTr. | | | |
| | | | | | | | 69,47 | | | |

**Beispiel 2 (Rezeptur für Frischkäsescheiben mit Kräuter, Doppelrahmstufe):**

| | Zutaten | Kg | % | Pro Tonne | TM | FiTr | Kg TM | Kg Fett | | |
|---|---|---|---|---|---|---|---|---|---|---|
| | Frischkäse 46% | 300,00 | 92,66 | 926,65 | 46,00 | 75,0 0 | 426,26 | 319,6 9 | | |
| | Gelatine | 7,00 | 2,16 | 21,62 | 98,00 | | 21,19 | 0,00 | | |
| | modifizierte Stärke | 0,82 | 0,25 | 2,53 | 98,00 | | 2,48 | 0,00 | | |
| | Johannisbrotkern mehl | 0,42 | 0,13 | 1,30 | 98,00 | | 1,27 | 0,00 | | |
| | Guarkernmehl | 0,42 | 0,13 | 1,30 | 98,00 | | 1,27 | 0,00 | | |
| | Carrageenan | 0,34 | 0,11 | 1,05 | 98,00 | | 1,03 | 0,00 | | |
| | Xanthan | 0,20 | 0,06 | 0,62 | 98,00 | | 0,61 | 0,00 | | |
| | Na Cl | 4,00 | 1,24 | 12,36 | 98,00 | | 12,11 | 0,00 | | |
| | Kräuterpulver | 3,50 | 1,08 | 10,81 | 98,00 | | 10,59 | 0,00 | | |
| | Knoblauchpulver | 0,40 | 0,12 | 1,24 | 98,00 | | 1,21 | 0,00 | | |
| | Zwiebelaroma | 0,30 | 0,09 | 0,93 | 50,00 | | 0,46 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | | | 0,00 | 0,00 | | | 0,00 | 0,00 | | |
| | Summe | 317,40 | 98,04 | 980,39 | | | | | | |
| | Kondensat (Wasser) | 6,35 | 1,96 | 19,61 | | | TM | Fett | | |
| | Gesamtsumme | 323,75 | 100,0 0 | 1000,00 | | | 47,85 | 31,97 | | |
| | Ausbeute | | | | | | FiTr. | | | |
| | | | | | | | 66,81 | | | |

**Beispiel 3 (Rezeptur für Frischkäsescheiben Natur, 0,2 % Fett absolut):**

| Roh-Nr. | Zutaten | Kg | % | Pro Tonne | TM | FiTr | Kg TM | Kg Fett | Preis / kg | Su. Preis |
|---|---|---|---|---|---|---|---|---|---|---|
| | Joghurtquark 18% | 300,00 | 87,62 | 876,22 | 18,00 | 1,10 | 157,72 | 1,73 | | 0,00 |
| | FK 106 | 3,50 | 1,02 | 10,22 | 98,00 | | 10,02 | 0,00 | | 0,00 |
| | NaCL | 2,00 | 0,58 | 5,84 | 98,00 | | 5,72 | 0,00 | | 0,00 |
| | Gelatine | 10,00 | 2,92 | 29,21 | 98,00 | | 28,62 | 0,00 | | 0,00 |
| | Innulin Raftline HPX | 3,00 | 0,88 | 8,76 | 98,00 | | 8,59 | 0,00 | | 0,00 |
| | Citrusfaser | 4,00 | 1,17 | 11,68 | 98,00 | | 11,45 | 0,00 | | 0,00 |
| | Buttermilcharoma | 0,50 | 0,15 | 1,46 | 50,00 | | 0,73 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | | | 0,00 | 0,00 | | | 0,00 | 0,00 | | 0,00 |
| | Summe | 323,00 | 94,34 | 943,40 | | | | | | |
| | Kondensat | 19,38 | 5,66 | 56,60 | | | TM | Fett | | DM/Kg |
| | Gesamtsumme | 342,38 | 100,00 | 1000,00 | | | 22,29 | 0,17 | | 0,00 |
| | Ausbeute | 6,00 | | | | | FiTr. | | Einheit | DM/EINH. |
| | | | | | | | 0,78 | | | 0,00 |
| | | | | | | | | | | |
| | | | | | | | | | | |

| | | | | | | | | | | |
|---|---|---|---|---|---|---|---|---|---|---|
| 69° C Erhitzen | | | | | | | | | | |
| 3-5 Min. Rühren | | | | | | | | | | |
| 100% | | | | | | | | | | |
| Käse soll fest sein | | | | | | | | | | |
| 50 bar Homo | | | | | | | | | | |

Die Frischkäsescheiben wurden einer Festigkeits- und Elastizitätsmessung unterzogen. Diese Messung wurde mit einem Penetrometer des Typs "TA XT2 Textur Analyser" der Firma WINOPAL Forschungsbedarf GmbH, D-29353 Ahnsbeck, mit einer Sonde mit 5 mm Durchmesser und einer Lochplatte mit einem Lochdurchmesser von 10 mm durchgeführt. Die mit diesem Gerät durchgeführte Penetrationsmessung erlaubt, die Festigkeit und Elastizität einer Lebensmittelprobe zu erfassen und eignet sich insbesondere zur Charakterisierung von Käse. Hierbei wurde eine mittlere Bruchfestigkeit von ca. 1,4 N bis 1,8 N und im Mittelwert, gemittelt über mehrere Messungen an verschiedenen Proben von ca. 1,58 N bei Zimmertemperatur gemessen. Zum Vergleich hierzu beträgt die typische Bruchfestigkeit von Schmelzkäsescheiben ca. 0,9 N.

Weiterhin wurden erfindungsgemäß hergestellte Frischkäserollen, welche noch nicht in Scheiben geschnitten waren, mittels eines Texturmessgeräts zur Ermittlung der "Stevens-Härtewerte" untersucht und die ermittelten "Stevens-Härtewerte" wurden mit denjenigen von Vergleichsprodukten, insbesondere Schmelzkäse, verglichen. Zur Ermittlung der "Stevens-Härtewerte" wurde ein nach dem Prinzip der Penetrationsmessung arbeitender "Stevens-Texturanalyser" verwendet. Bei dem angewandten Messprinzip dringt ein Prüfkörper einer bestimmten Geometrie (kegelförmig, zylinderförmig oder fadenkreuzförmig) mit einer vorgegebenen Geschwindigkeit und Eindringtiefe in die zu untersuchende Lebensmittelprobe ein. Der Widerstand, der dem Prüfkörper von der Lebensmittelprobe entgegengesetzt wird, wird als Festigkeitswert in Gramm angegeben, woraus sich die Widerstandskraft (in Newton) berechnen lässt. Da die Stevens-Festigkeitswerte von den äußeren Einflüssen, insbesondere der Temperatur der untersuchten Lebensmittelprobe abhängig sind, wurden die zu vergleichenden Proben unter identischen Bedingungen miteinander verglichen. Wegen der hohen Festigkeit der hier untersuchten erfindungsgemäßen Frischkäseproben wurde ein Messgerät (Texturanalyser der Firma Stable Micro Systems, Gerätebezeichnung TA X T2) verwendet, welches eine Messung hoher Festigkeiten bis zu 5.000 g zulässt. Bei den Messungen wurde als Eindringgeschwindigkeit jeweils 1 mm/s und als Eindringtiefe 10 mm gewählt. Der maximal angezeigte Messwert wurde als Festigkeitswert aufgezeichnet.

Nachfolgende Tabellen geben die so erhaltenen Festigkeitswerte von verschiedenen Lebensmittelproben und im Vergleich dazu die bei den erfindungsgemäßen Frischkäserollen ermittelten Festigkeitswerte wieder:

**Tab. 1: Ergebnisse der Festigkeitsmessung mit zylindrischem Prüfkörper aus Plexiglas mit 0 25 mm**

| **Produkt** | **Festigkeit bei 5° C** | **Festigkeit bei 20° C** |
|---|---|---|
| Brunch natur 22 % Fett | 488 g | 52 g |
| Becherfüllhöhe: ca. 35 mm | | |
| Philadelphia light 5 % Fett | 497 g | 89 g |
| Becherfüllhöhe ca. 25 mm*) | | |
| Philadelphia Doppelrahmstufe | 1.150 g | 518 g |
| Becherfüllhöhe ca. 25 mm*) | | |
| erfindungsgemäße Frischkäserolle 0,2 % | > 5.000 g | 1.640 g |
| Fett Scheibenhöhe: ca. 35 mm | | |
| erfindungsgemäße Frischkäserolle Doppelrahmstufe | > 5.000 g | 1.870 g |
| Scheibenhöhe: ca. 35 mm | | |

| | | |
|---|---|---|
| *) wegen der geringeren Becherfüllhöhe sind die Werte nur bedingt vergleichbar, da bei einer Penetrationsmessung ev. Randeinflüsse zu beachten sind. | | |

Die Festigkeitswerte der erfindungsgemäßen Frischkäserollen liegen, gemessen bei 5° C und dem verwendeten Prüfkörper mit einem Durchmesser von 25 mm bei mindestens dem 10-fachen Wert der hier zum Vergleich ermittelten Werte der Aufstriche mit Hydrokolloiden. Bei Raumtemperatur (20° C) beträgt das Verhältnis der Festigkeitswerte sogar mehr als 18 bis mehr als 30.

Die Relation der Festigkeiten bei 5° C und bei 20° C wurde bestimmt, um unterschiedliche Gebrauchssituationen beim Verzehr bzw. bei der Verwendung der Vergleichsprodukte zu simulieren. Nach Erwärmung der Lebensmittelproben von 5° C auf 20° C geht die Festigkeit bei dem Produkt "Brunch® " um fast das 10-fache zurück. Die Festigkeit des Vergleichsprodukts "Philadelphia® light" geht um das 5,5-fache zurück. Das Vergleichsprodukt "Philadelphia® Doppelrahmstufe" zeigt den Faktor 2,2. Wegen der Messbereichsgrenze für die erfindungsgemäßen Frischkäserollen kann bezüglich der Änderung der Festigkeitswerte mit höherer Temperatur keine Aussage getroffen werden (die Messgrenze des verwendeten Analysegeräts liegt bei 5.000 g, welche bereits bei einer Temperatur von 5° C überschritten wird).

Um das Temperaturverhalten der Festigkeitswerte der erfindungsgemäßen Frischkäserollen zu bestimmen, wurde deshalb eine zusätzliche Messung mit einem zylindrischen Prüfkörper aus Plexiglas mit einem Durchmesser von 13 mm durchgeführt. Hierbei wurden folgende Ergebnisse ermittelt:

**Tab. 2: Ergebnisse der Festigkeitsmessung mit zylindrischem Prüfkörper aus Plexiglas mit Ø 13 mm**

| **Produkt** | **Festigkeit bei 5° C** | **Festigkeit bei 20° C** |
|---|---|---|
| Brunch natur Becherfüllhöhe: 35 mm | 151 g | 20 g |
| Philadelphia light 5 % Fett Becherfüllhöhe ca. 25 mm*) | 227 g | 25 g |
| Philadelphia Doppelrahmstufe Becherfüllhöhe ca. 25 mm*) | 518 g | 175 g |
| erfindungsgemäße Frischkäserolle 0,2 % Fett Scheibenhöhe: 35 mm | 1.594 g | 756 g |
| erfindungsgemäße Frischkäserolle Doppelrahmstufe Scheibenhöhe: 35 mm | 3.268 g | 554 g |

| | | |
|---|---|---|
| *) wegen der geringeren Becherfüllhöhe sind die Werte nur bedingt vergleichbar. | | |

Wie sich aus der Tabelle 2 ergibt, liegen die Festigkeitswerte, welche mit dem Prüfkörper mit 13 mm Durchmesser gemessen wurden, für alle Vergleichsprodukte innerhalb des maximalen Messbereichs des verwendeten Messgerätes. Die Festigkeitswerte für die erfindungsgemäßen Frischkäserollen liegen bei einer Temperatur von 5° C mindestens bei dem 10-fachen Wert der Vergleichsprodukte mit Hydrokolloiden ("Brunch® natur" und "Philadelphia® light" sowie "Philadelphia® Doppelrahmstufe"). Bei Temperaturen von 20° C beträgt das Verhältnis der Festigkeitswerte der erfindungsgemäßen Frischkäserollen bezogen auf die genannten Vergleichsprodukte mit Hydrokolloiden mehr als 20.

Wie den Messergebnissen der Tabelle 2 weiterhin zu entnehmen ist, verhalten sich die Vergleichsprodukte bei Erwärmung von 5° C auf 20° C unterschiedlich. Das Vergleichsprodukt "Brunch® natur" wird bei Erwärmung deutlich weicher und zwar um den Faktor 7,55 bei dem Prüfkörper mit 13 mm Durchmesser. Das Vergleichsprodukt "Philadelphia® light" verliert bei Erwärmung das 9-fache an Festigkeit und das Vergleichsprodukt "Philadelphia® Doppelrahmstufe" wird nach Temperaturerhöhung um das 3-fache weicher. Die erfindungsgemäßen Frischkäserollen werden bei Erwärmung von 5° C auf 20° C bei dem Prüfkörper mit 13 mm Durchmesser in der Doppelrahmstufe um den Faktor 5,9 und in der Magerstufe (0,2 % Fett) um den Faktor 2,11 weicher.

In der Regel schwanken die Festigkeitswerte in Abhängigkeit von der Temperatur stärker bei Produkten, die in der Struktur auf Fett basieren (wie z. B. Butter) oder auf Gelatine basieren, verglichen mit Produkten, die in der Struktur auf Protein basieren (wie z. B. Schmelzkäse). Das Verhalten der Festigkeitswerte der Vergleichsprodukte mit Hydrokolloiden zeigt dies. Das Verhalten der erfindungsgemäßen Frischkäserollen (insbesondere in der Magerstufe) liegt stärker bei einer auf Protein basierenden Struktur. Eine Proteinstruktur beruht auf einer thermisch irreversiblen Gelbildung, wohingegen eine Fett- oder Gelatinestruktur auf einer thermisch reversiblen Gelbildung beruht.

Im Gegensatz zu den untersuchten Vergleichsprodukten sind die erfindungsgemäßen Frischkäserollen geeignet, in Scheiben portioniert zu werden. Die in Scheiben gemäß der Erfindung geschnittenen Frischkäsescheiben wurden hinsichtlich ihrer Festigkeitswerte mit im Handel erhältlichen Schmelzkäsescheiben verglichen, wobei sowohl die erfindungsgemäßen Frischkäsescheiben als auch die Vergleichs-Schmelzkäsescheiben jeweils eine Dicke von 3 mm aufwiesen. Als Vergleichs-Schmelzkäsescheiben wurden folgende Produkte gewählt:
a) Karwendel® Meister-Scheiben, 45 % Fett in der Trockenmasse (F.i.Tr.)
b) Hochland® Schmelzkäsescheiben, Magerstufe (0,2 % Fett)
c) Hochland® Schmelzkäsescheiben, Doppelrahmstufe (mind. 60 % F.i.Tr.).

Die Scheiben wurden jeweils auf eine Lochscheibe aus Kunststoff mit einer Bohrung mit 10 mm Durchmesser gelegt und mit einem zylindrischen Prüfkörper aus Plexiglas mit 5 mm Durchmesser zentrisch durchstoßen (10 mm Eindringtiefe, Eindringgeschwindigkeit 1 mm/s). Die Messungen an den Scheiben wurden jeweils bei einer Temperatur von 5° C durchgeführt. Es ergab sich hierbei folgendes Ergebnis:

**Tab. 3: Festigkeitswerte von in Scheiben geschnittenen Frischkäserollen und Schmelzkäsescheiben**

| **Produkt** | **Festigkeit bei 5° C** |
|---|---|
| erfindungsgemäße Frischkäserolle (0,2 % Fett) | 108 g |
| Erfindungsgemäße Frischkäserolle Doppelrahmstufe | 85 g |
| Karwendel Scheiben 45 % Fett | 52 g |
| Hochland Sandwich-Scheiben Mager | 276 g |
| Hochland Sandwich-Scheiben Doppelrahmstufe | 249 g |

Wie der Tabelle 3 zu entnehmen ist, liegen die Festigkeitswerte der erfindungsgemäßen Frischkäserollen mit 108 g und 85 g innerhalb der Werte von relative weichen Schmelzkäsescheiben (Vergleichsprodukt "Karwendel®") und relativ festen Schmelzkäsescheiben (Vergleichsprodukt "Hochland®").

Die erfindungsgemäßen Frischkäsescheiben ähneln also hinsichtlich ihrer Festigkeit dem Verhalten von Schmelzkäsescheiben. Der erfindungsgemäße Frischkäse bzw. die erfindungsgemäßen Frischkäsezubereitungen unterscheiden sich von den Vergleichsprodukten mit Hydrokolloiden sowohl hinsichtlich ihrer Festigkeit als auch hinsichtlich der Festigkeitsveränderung bei Temperaturerhöhung erheblich. Dies deutet auf grundsätzliche Unterschiede im Mechanismus der Gelbildung hin. Während beim Vergleichsprodukt "Brunch®" die thermisch reversible Gelbildung durch Gelatine und beim Vergleichsprodukt "Philadelphia® light" durch Johannisbrotkernmehl und Carrageen ausschlaggebend zu sein scheint, ist bei den erfindungsgemäßen Produkten eine Proteinvernetzung entscheidend.

## Patentansprüche

1. Frischkäse oder Frischkäsezubereitung, enthaltend Gelatine als Verdickungsmittel und Stabilisatoren, **dadurch gekennzeichnet, dass** der Frischkäse oder die Frischkäsezubereitung in Scheiben portioniert ist, wobei die dauerhafte Beibehaltung der scheibenförmigen Konsistenz durch ein Gewichtsanteilsverhältnis der Gelatine zu den Stabilisatoren von 1:1 oder höher bewirkt ist.

2. Frischkäse oder Frischkäsezubereitung nach Anspruch 1, **dadurch gekennzeichnet, dass** der Gewichtsanteil der Gelatine am Gesamtgewicht zwischen 1 und 4 % beträgt.

3. Frischkäse oder Frischkäsezubereitung nach Anspruch 1 oder 2, **dadurch gekennzeichnet, dass** der Gewichtsanteil der Stabilisatoren am Gesamtgewicht zwischen 0,4 und 2 % beträgt.

4. Frischkäse oder Frischkäsezubereitung nach einem der voranstehenden Ansprüche, **dadurch gekennzeichnet, dass** die Dicke der Scheiben zwischen 1 und 15 mm beträgt.

5. Frischkäse oder Frischkäsezubereitung nach einem der voranstehenden Ansprüche, **dadurch gekennzeichnet, dass** die Stabilisatoren ausgewählt sind aus der Gruppe organsicher Stabilisatoren, insbesondere Guar-Mehl, Carrageenan, Johannisbrotbaumkernmehl und Xanthan oder einer Mischung hiervon.

6. Frischkäse oder Frischkäsezubereitung nach einem der voranstehenden Ansprüche, **dadurch gekennzeichnet, dass** weitere Zusatzstoffe wie Aromen, Geschmacksverstärker, Gewürze, NaCl, Kräuter, Früchte oder Fruchtzubereitungen enthalten sind.

7. Frischkäse oder Frischkäsezubereitung nach einem der voranstehenden Ansprüche, **dadurch gekennzeichnet, dass** der Frischkäse oder die Frischkäsezubereitung streichfähig ist.

8. Verfahren zur Herstellung und Portionierung von Frischkäse oder Frischkäsezubereitungen mit folgenden Schritten:
- Mischen einer Frischkäsegrundmischung, welche mindestens einen Milchbestandteil, wie z. B. Milch, Rahm, Quark, Molke oder Sahne sowie Gelatine als Verdickungsmittel und Stabilisatoren enthält;,
- Erhitzen der Frischkäsegrundmischung unter mechanischer Bearbeitung auf Temperaturen zwischen 65°C bis 95°C, insbesondere 75°C und 88°C;
- Abfüllen und Verpacken der erhitzten Frischkäsegrundmischung in eine Folienverpackung;
- Abkühlen der verpackten Frischkäsegrundmischung auf Temperaturen unterhalb von 11°C;
- Entfernen der Folienverpackung nachdem die Frischkäsegrundmischung zu einem Fischkäseblock durchgekühlt ist;
- Schneiden des Frischkäseblocks in Scheiben.

9. Verfahren nach Anspruch 8, **dadurch gekennzeichnet, dass** die Scheiben anschließend entweder einzeln oder mehrere Scheiben im Stapel oder geschindelt in einer Schlauchbeutel- oder Tiefziehverpackung verpackt werden.

10. Verfahren nach Anspruch 9, **dadurch gekennzeichnet, dass** die Verpackung der Scheiben in Schlauchbeuteln unter Vakuum und/oder unter Schutzgas erfolgt.

11. Verfahren nach einem der Ansprüche 8 bis 10, **dadurch gekennzeichnet, dass** das Abfüllen der erhitzten Frischkäsegrundmischung in Formen erfolgt, in welche die Folienverpackung eingelegt ist.

12. Verfahren nach einem der Ansprüche 8 bis 11, **dadurch gekennzeichnet, dass** das Abfüllen in vorgeformten Folienverpackungen erfolgt.

13. Verfahren nach einem der Ansprüche 8 bis 12, **dadurch gekennzeichnet, dass** der durchgekühlte Frischkäseblock, insbesondere in Form einer Frischkäserolle, bei einer Temperatur von 5° C eine Stevens-Festigkeit von mehr als 1.000 g aufweist, gemessen mit einem Stevens-Texturanalyser mit einem zylindrischen Prüfkörper aus Plexiglas mit einem Durchmesser von 13 mm.

14. Verfahren nach einem der Ansprüche 8 bis 12, **dadurch gekennzeichnet, dass** der durchgekühlte Frischkäseblock, insbesondere in Form einer Frischkäserolle, bei einer Temperatur von 20° C eine Stevens-Festigkeit von mehr als 500 g aufweist, gemessen mit einem Stevens-Texturanalyser mit einem zylindrischen Prüfkörper aus Plexiglas mit einem Durchmesser von 13 mm.

15. Verfahren nach einem der Ansprüche 8 bis 11, **dadurch gekennzeichnet, dass** das Verfahrenserzeugnis, nämlich die Frischkäsescheiben, bei einer Scheibendicke von 3 mm und einer Temperatur von 5° C eine Stevens-Festigkeit von mehr als 50 g aufweisen, gemessen mit einer Lochscheibe aus Kunststoff mit einer Bohrung mit 10 mm Durchmesser und einem zylindrischen Prüfkörper aus Plexiglas mit 5 mm Durchmesser.
